Europäisches Patentamt

(19) European Patent Office

Office européen des brevets

(11) Publication number: **0 014 986**

**A1**

(12) **EUROPEAN PATENT APPLICATION**

(21) Application number: 80100814.5

(22) Date of filing: 18.02.80

(51) Int. Cl.³: **B 62 J 5/20**

(30) Priority: 19.02.79 JP 20020/79
26.05.79 JP 70975/79
30.07.79 JP 105044/79
15.11.79 JP 158532/79

(43) Date of publication of application:
03.09.80 Bulletin 80/18

(84) Designated Contracting States:
DE FR GB NL

(71) Applicant: Yamaguchi, Toshiharu
678 Jindaiji-cho
Chofu-shi Tokyo(JP)

(72) Inventor: Yamaguchi, Toshiharu
678 Jindaesentative: Berg, Wilhelm, Dr. et al,
Dr. Berg, Dipl.-Ing. Stapf, Dipl.-Ing. Schwabe, Dr. Dr.
Sandmair Mauerkircherstrasse 45
D-8000 München 80(DE)

(54) Revolving reflector for bicycles.

(57) The reflector reflects light dynamically, twinkling and sparkling intensely, helping the drivers of approaching cars to see and recognize the bicycles and its rider quickly, so that accidents of bicycles can be prevented. The revolving reflector comprises a revolving reflector member which is rotated at least when the bicycle is run, a support member for supporting rotatably the reflecting member and an attachment member for attaching the support member to a desired portion of the bicycle.

FIG. 6

## Revolving Reflectors for Bicycles

The present invention relates to a revolving reflector for
bicycles and the like (hereafter referred to as bicycles), designed to help prevent accident at night by making the bicycles more readily visible to the drivers of cars.

There are regulations with respect to the reflectors for use with cars which have done good in preventing car accidents. Recently bicycles provided with improper refelectors have become the subject of control of the regulations, but still the accidents of bicycles with cars frequently occur, particularly at night. Conventional reflectors for use with bicylces can be roughtly classified into the following three types:

    (1) First type: Reflectors attached to the rear fender (rear mudgurad) of bicycles

    (2) Second type: Reflectors and fluorescent tapes attached to the pedals and pedal frames of bicycles

    (3) Third type: Reflectors attached to the spokes of front wheels and rear wheel of bicycles

The above-mentioned reflectors for preventing accidents of bicycles with cars, however, have the following shortcomings:

The reflectors of the first type are effective by and large from the viewpooint of the construction of bicycles, if they are properly attached to the rear fender and there is no problem in the angles of incidence and reflection in the reflectors. However, since the reflectors themselves do not move, the drivers of approaching cars cannot see and recognize the relectors quickly, for example, under the following circumstances:

(a) In a street with colorful signboards and illuminated signboards or on a road which is wet with rain and is illuminated by neon light.

(b) In an unilluminated steet or road which is curved and is provided with reflectors for indicating the edges of the street, the height of the reflectors is almost the same as that of the reflectors of bicycles.

(c) Under the circumstance of either (a) or (b) mentioned above, when the color of the clothes of the rider of bicycle is similar to the color of the background and the rider is not readily visible to the drivers of cars, for instance, a black coat at night or a white jacket in the street covered with snow.

As to the reflectors and fluorescent tapes attached to the pedals and pedal frames of bicycles of the second type, they are rotated together with the pedals and help the drivers of approaching cars to see and recognize the bicycle. However, when the pedals are muddy, their light reflection performance is reduced significantly. Furthermore, when the rider happens to wear shoes which may cover the pedals completely and make the reflectors and fluorescent tapes invisible to the drivers of cars, the the reflectors and fluorescent tapes do not perform their intended function, while the rider does not notice it. Those shortcoming cannot be removed from the reflectors and fluorescent tapes of the second type.

The reflectors attached to the spokes of the front wheels and rear wheels of bicylces of the third type make greater movement than the reflectors of the second type and are more effective in giving warnings to the car drivers than the reflectors of the first type and the second type. However, the reflectors of the third type are designed so as to be useful only when the rider crosses the road and therefore they are not readily visible to the drivers of cars approaching from behind or in front of the bicycles.

It is therefore an object of the present invention to provide a revolving reflector for bicycles capable of reflecting light dynamically upon receiving light thereby, twinkling and sparkling intesely, helping the drivers of approaching cars to see and recognize the bicycle and its rider quickly, so that accidents of bicycles can be prevented.

Another object of the present invention is to provide a revolving reflector for bicycles which reflects light constantly so as to be visible to the drivers of cars at any condition.

A further object of the present invention is to provide a revolving reflector for bicycles which is low in the cost but has a high light reflecting performance.

A still further object of the present invention is to provide a revolving reflector for bicycles which is visible from any position.

According to the present invention, the revolving reflector comprises a revolving reflector member which is rotated by the wind, which reflects light, twinkling and sparkling by use of a spiral light reflecting material attached to a rotating member.

Furthermore, according to the present invention, in order to prevent the rotating member from being rotated too fast and giving an impression as if it is a stationary reflecting light, when the wind is too strong or the bicycle is run at high speed, a speed control apparatus is provided for controlling the revolution of the rotating member, and even if the wind is weak or the bicycle is stopped, the rotating member is rotated by weak wind.

Furthermore, according to the present invention, the construction of the revolving reflector is simple and can be attached to any part of the bicycle by use of ordinary fixing parts. In particular, it can be attached to the hub of either wheel of the bicycle. Therefore, it is visible from any position.

The other objects and features of the invention can be readily understood from the following detailed description of the preferred embodiments according to the invention in conjunction with the brief description of the drawings.

Fig. 1 is a perspective view of an embodiment of a revolving reflector for bicycles according to the invention.

Fig. 2 is a perspective view of the revolving reflector of Fig. 1, which includes a partial fragmentary view of the revolving reflector.

Fig. 3 is a perspective view of another embodiment of a revolving reflector for bicycles according to the invention.

Fig. 4 is a perspective view of a speed control apparatus for controlling the revolution of a revolving reflector member that can be employed in the invention.

Fig. 5 is a perspective view of another speed control apparatus that can be employed in the invention.

Fig. 6 is a perspective view of the revolving reflector of Fig. 1 which is attached to a bicycle.

Fig. 7 is a perspective view of a still further embodiment of a revolving reflector according to the invention, which contains a partial broken view thereof.

Fig. 8 is a perspective view of a further embodiment of a revolving reflector according to the invention.

Fig. 9 is a perspective view of a further embodiment of the invention.

Fig. 10 is a perspective view of a further embodiment of the invention.

Fig. 11 is a plan view of the revolving reflector of Fig. 10.

Fig. 12 is a perspective view of a further embodiment of a revolving reflector of the invention.

Fig. 13 is an enlarged perspective view of a rotating member of the revolving reflector of Fig. 12.

Fig. 14 illustrates how the revolving reflector of Fig. 12 is attached to a bicycle.

Fig. 15 is a perspective view of a further embodiment of the invention.

Fig. 16 is a cross section taken on line A-A in Fig. 15.

Fig. 17 is a perspective view of a further embodiment of the invention.

Fig. 18 shows the revolving reflector of Fig. 15 which is attached to the right side of a front wheel of a bicycle.

Fig. 19 is a perspective view of a further embodiment of the invention.

Fig. 20 is a cross section taken on line A-A of Fig. 19.

Fig. 21 illustrates the revolving reflector of Fig. 21 which is attached to the right side of a front wheel of a bicycle.

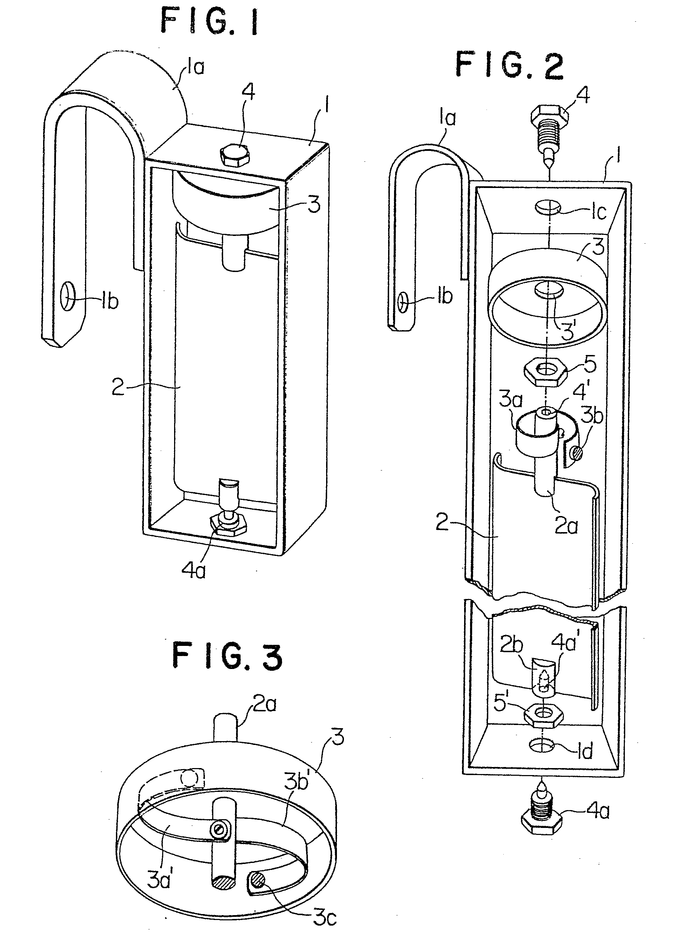

Referring to Fig. 1, there is shown an embodiment of a revolving reflector for bicycles according to the invention. In Fig. 1, reference numeral 1 represents a main frame of the revolving reflector. The main frame 1 is made of a crosswise cut square pipe and a fixture 1a is fixed to the main frame by welding or ribets. In the fixture 1a, there is formed a hole 1b for allowing a bolt to pass therethrough in order to fix the main frame 1 to the bicycle. In an upper space within the main frame 1, there is disposed pivotally a rotation control drum 3, and in a lower space within the main frame 1, there is disposed pivotally a revolving reflector plate 2.

Fig. 2 is a partly fragmentary view of the revolving reflector of Fig. 1 for a better understanding of its construction. As shown in Fig. 2, in a central portion of a top portion of the main frame 1 and in a central portion of a bottom portion of the main frame 1, there are formed holes 1c, 1d, respectively. A shoulder screw 4, which serves as a bearing, is caused to pass through the hole 1c and a hole 3' formed in the central portion of the rotation control control drum 3 and is fixed to the main frame 1 by a nut 5. A shoulder scew 4a, which also serves as a bearing, is likewise caused to pass through the hole 1d and is fixed to the main frame 1 by a nut 5'. Between the thus attached bearings, namely the shoulder screws 4 and 4a, the revolving reflector plate 2 is disposed in the following manner.

A top portion and a bottom portion of the revolving reflectc 2 on its vertical axis are respectively inserted tightly into the slots formed in shafts 2a, 2b, and in the shafts 2a, 2b, there are formed spot facings 4', 4a', respectively, and projected portions of the shoulder screws 4, 4a are fitted into the spot facings 4', 4a', so that the revolving reflector plate 2 can be rotated smoothly on the projected portions of the shoulder screws 4, 4d through the shafts 2a, 2b.

The opposite sides of the revolving reflector plate 2 are curved in the opposite directions so as to be rotated efficiently in the wind. In this embodiment, there is provided a speed control means for controlling the rotation of the revolving reflector plate 2 so as not to be revolved too fast in strong wind or when the speed of the bicycle is increased. In this embodiment, the rotation of the reflector plate 2 is controlled by use of the centrifugal force generated when the revolving reflector plate 2 is

revolved too fast. To be more specific, a spiral spring 3a is fixed to a top portion of the shaft 2a by a screw, and when the revolving reflector plate 2 is rotated too fast, the spiral spring 3a is pushed away from its center and its outer surface is brought into contact with the inner surface of the rotation control drum 3, so that the rotation of the revolving reflector plate 2 is controlled by the friction of the spiral spring 3a against the inner surface of the rotation control drum 3. In an end portion of the outer surface of the spiral spring 3a, there is embedded a piece of hard rubber 3b in order to increase the centrifugal force of the spiral spring 3a as well as its speed control performance.

As shown in Fig.1, the psiral spring 3a is entirely built in the rotation control drum 3. The elastic strength of the spiral spring 3a is adjusted in such a manner that the hard rubber 3b is positioned away from the inner surface of the rotation control drum 3 during normal rotation of the revolving reflector plate 2.

In this embodiment, one side of the revolving reflector plate 2 is plated to reflect light effectively and the other side is coated with a fluorescent paint. It will be more preferable that the reflector plate 2 be made of such a reflector as is used in the tail reflectors of cars.

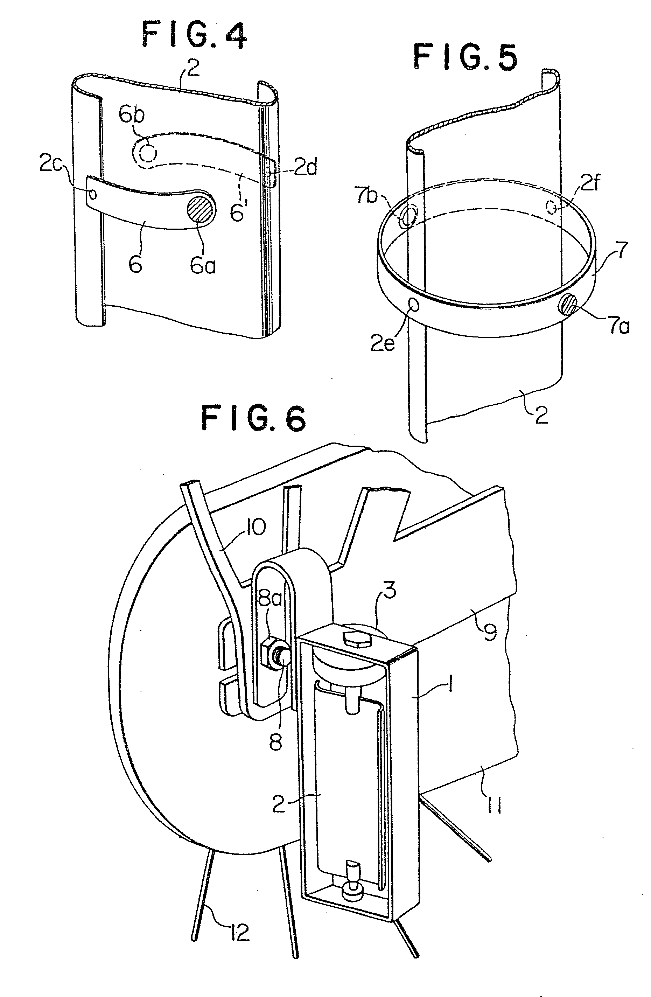

Referring to Figs. 3, there is shown another rotation control device for controlling the rotation of the reflector plate 2, which corresponds to the spiral spring 3a in the above-mentioned embodiment. In this device, spring plates 3a', 3b' are fixed by screws to the opposite outer sides of the shaft 2a. Fig. 3 particularly shows perspectively the speed control device in operation.

Referring to Fig. 4, there is shown a further rotation control device for controlling the rotation of the reflector 2. In this device, the end portions of spring plates 6, 6( are attached to the opposite sides 2c, 2d of the reflector plate 2 whose opposite sides are bent in the opposite directions for effective rotation by the wind and hard rubber pieces 6a, 6b which are embedded respectively in the other end portions of the spring plates 6, 6'. When the reflector plate 2 is rotated at a speed beyond a predetermined limit, the spring plates 6, 6' are moved outwards by centrifugal force, so that the hard rubber pieces 6a, 6b of the spring plates 6, 6' are caused to strike against the inner surface of the main frame 1 shown in Fig. 2.

Fig. 5 shows a still further rotation control device. In this device, the spring plates 6, 6' in Fig. 4 are replaced with a ring-shaped member which is represented by reference number 7. The ring member 7 is fixed to the revolving reflector 2 by welding or rivets at the opposite side portions 2e, 2f of the reflector plate 2, and at the central portions of the ring member 7 between the fixed portions thereof, there are embedded hard rubber pieces 7a, 7b. When the revolving reflector plate 2 is rotated at a speed beyond a predetermined limit, the ring member 7 becomes oval in the shape by centrifugal force and the hard rubber pieces 7a, 7b come into contact with the inner surface of the main frame 1, so that the rotation of the reflector plate 2 is controlled.

The spring plates as mentioned above are selected such that they do not control the rotation of the revolving reflector plate 2 when the relector plate 2 is in normal rotation, from the viewpoint of the kind of material, thickness and width of the spring plate and the centrifugal force applied to the spring plates during the rotation of the reflector plate 2.

Fig. 6 shows how the embodiment of the revolving reflector for bicycles as shown in Figs. 1 and 2 is attached to the bicycle in practice. In Fig. 6, the main frame 1 of the revolving reflector is attached to a shaft 8 of the rear wheel of a bicycle. The revolving reflector according to the invention can be attached to any portion of the bicycle as long as it is safe and suitable for the reflection of light from the reflector. In Fig. 6, reference numeral 1 represents the main frame of the revolving reflector, reference numeral 8 the shafts of the rear wheel of the bicycle, reference numeral 8a a nut for fastening the shaft 8 of the rear wheel, reference numeral 9 the body of the bicycle, reference numeral 10 a support member for supporting a luggage-carrier, reference numeral 11 a chain guard, and reference numeral 12 spokes.

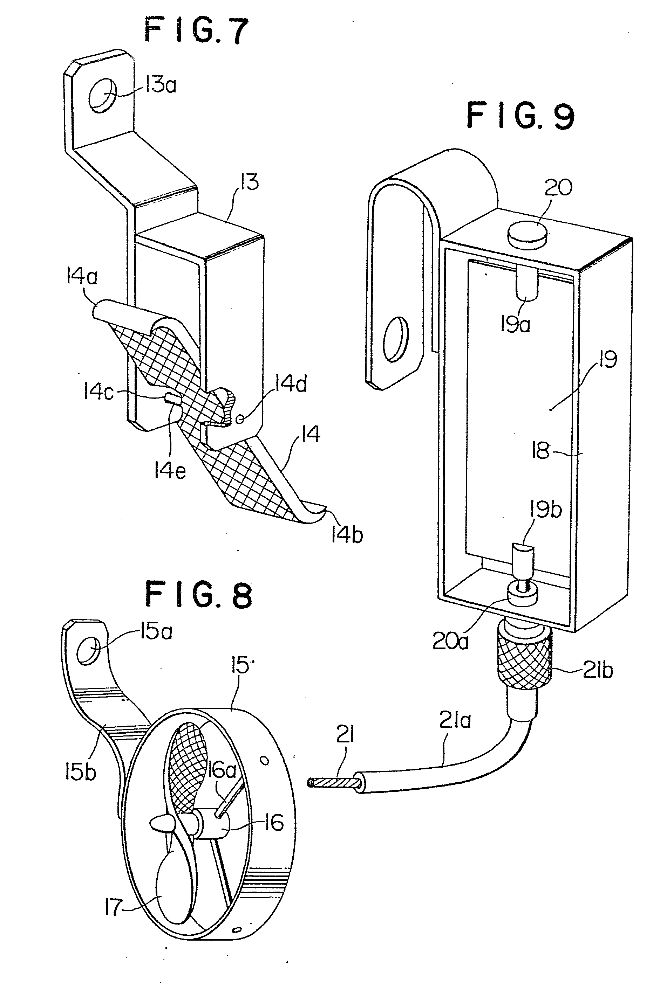

Fig. 7 is a perspective view of another embodiment of a revolving reflector for bicycles according to the invention, which includes a partial broken view of the revolving reflect. In this embodiment, a revolving reflector plate 14 is also rotated by the wind. However, unlike the embodiments of the revolving reflectors so far exaplained, the rotation shaft of the revolving reflector plate 14 is disposed horizontally. In Fig. 7, a main frame 13 of the revolving relector forks into two parts. In an upper portion of the revolving reflector, there extends an attachment portion in which a hole 13a is made for allowing a bolt to pass therethrough in order to attach the revolving reflector to the body of the bicycle. The attachment portion is S-shaped so that the revolving reflector can be attached to any type of bicycles. Inside the lower forked portions of the main frame 13, the revolving refelector plate 14 is pivotally mounted on a shaft 14e which is embedded into a central portion of the revovling reflector plate 14. The opposite end portins 14a, 14b of the revolving reflector plate 14 are curved as shown in Fig. 7 so that the reflector plate 14 is rotated by the wind when one rides the bicycle. In Fig. 7, reference numerals 14, 14d each represent bearing holes of the reflector plate 14. As in the case of the so-far mentioned revolving reflectors according to the invention, the revolving reflector plate 14 can be made of metal or synthetic resin. Alternatively the reflector plate 14 can be made of a reflection mirror for cars, which reflects light intensely when it is illuminated by head light of cars at night. In Fig. 6, the reflection mirror is shown by cross stripes. The main frame 13 of the revolving reflector can be attached to any portion of the bicycle as long as it is safe and a sufficient wind for the rotation of the revolving reflector plate 14 can be obtained and a high light reflecting performance can be obtained.

Referring to Fig. 8, there is shown perspectively a further embodiment of the invention. In this embodiment, the rotation shaft of a propeller-like reflector 17 is disposed parallel to the running direction of the bicycle unlike the so-far explained embodiments of the invention.in which each rotation shaft of the reflector plates is disposed normal to the running direction of the bicycle. In Fig. 8, a main frame 15 of the revolving reflector is a ring which can be made, for example, by cutting crosswise a pipe. An attachment member 15a is fixed to the main frame 15 by welding or rivets and inside the main frame 15, the propeller-like reflector plate 17 is rotatably disposed. The reflector plate 17 can be made of metal or synthetic resin and the front and back sides of a half portion of the propeller-like plate are made of the previously mentioned reflection mirror for cars. The thus constructed reflector plate 17 is pivotally mounted on a bearing 16 and is supported by the main frame through a bearing support member 16a.

Fig. 9 shows perspectively a still further embodiment of
a revolving reflector for bicycles according to the invention. In this embodiment, a revolving reflector plate 19
is rotated by the rotation of a wheel of bicycle, unlike the
so-far explained revolving reflector plates which are rotated
by the wind. Since a main frame 18 of the revolving reflector
is the same as the main frame 1 in the embodiment of Figs.
1 and 2, its explanation is omitted here. The revolving
reflector plate 19 is made in such a shape and size so as
to be rotatable inside the main frame 18 and one side of the
reflector plate 19 is finished like a mirror, for example,
by plating, and the other side of the reflector plate 19 is
made of the previously mentioned reflection mirror for cars
or the reflection mirror is fixed to the other side of the
revolving reflector plate 19. The thus-constructed revolving
reflector plate 19 is fixed to shafts 19a, 19b in the same
manner as in the case of the revolving reflector in Figs. 1
and 2. More specifically, a top portion and bottom portion
of revolving reflector 19 on its vertical axis are respectively inserted tightly into the slots formed in the shafts
19a, 19b. One end of a flexible shaft 21 is inserted into
the shaft 19b and is supported rotatably in association
with an upper bearing 20. The flexible shaft 21 passes
through a protecting cable 21a. The other end of the flexible
shaft 21 is connected to a speed meter which is attached to
bicycles for sports, so as to follow the rotation of a
wheel of the bicycle. In a lower portion of a bearing 20a,
there are formed threads which engage with a knurled screw
21b which is attached to an end portion of the protecting
cable 21a of the flexible shaft 21.

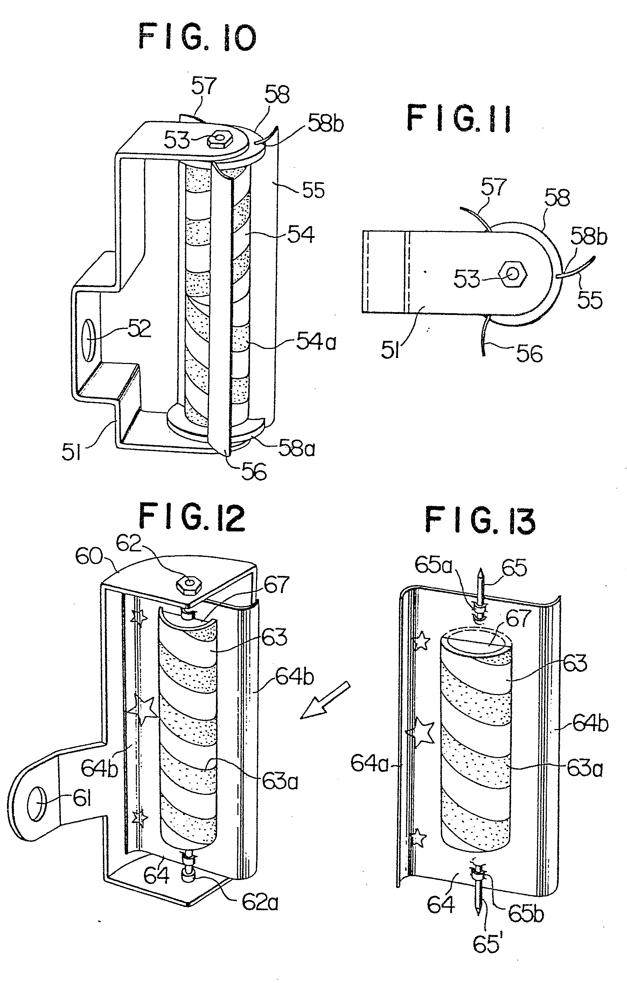

Fig. 10 shows perspectively a further embodiment of a
revolving relector for bicycles according to the invention, in which a revolving reflector is rotated by the wind. In Fig. 10, reference numeral 51 represents a main frame of the revolving reflector which is approximately in the shape of topped U. In a central portion of the main frame 51, there is further formed a smaller toppled U-shaped portion in which an attachment hole 52 is formed. To an end portion of an upper portion of the main frame 51, there is fixed a bearing 53 by a screw. To an end portion of a lower portion of the main frame 51, there is also fixed a bearing in the same manner as mentioned above. Inside the main frame 51, there is disposed rotatably a rotating member between the above-mentioned upper bearing 53 and the lower bearing. The rotating member is rotated by the wind when the bicycle is running.

The rotating member will now be explained in more detail by referring to Fig. 11 which is a plan view of Fig. 10. In Fig. 11, reference numeral 54 represents a cyclinder to which peripheral surface of a spiral light reflecting material 54a having a predetermined width is attached. Reference numerals 55, 56 and 57 each represent wind receiving blades in the shape of a circular arc in their respective vertical directions. The wind receiving blades 55, 56, 57 are supported by the cylinder 54 and their upper portions are inserted into grooves 58b of a disc 58 and fixed thereto by welding, and their lower portions are also inserted into grooves 58b of a disc 58a and fixed thereto by welding. In a central portion of each of the discs 58, 58a, there is further formed a hole, and a shaft which is longer than the cylinder 54 is passed through the holes and fixed thereto in a manner such that the opposite ends of the shaft are projected from the discs 58, 58a by an equal length. In Fig. 11, the wind receiving blades 55, 56, 57 are arranged in the same direction, so that in this embodiment, the cylinder 54

- 15-

is rotated clockwise by the wind.

Fig. 12 perspectively shows a further embodiment of a revolving reflector for bicycles according to the invention. Also in this revolving reflector, a revolving reflector member is rotated by the wind. In Fig. 12, reference numeral 60 represents a main frame of the revolving reflector, which has an attachment hole 61 for attaching the revolving reflector to part of a bicycle. The whole shape of the main frame 60 is shaped like a quarter of a Silocco fan when it is viewed from the shaft of the fan. To an upper portion and a lower portion of the main frame 60, bearings 62, 62a are fixed respectively by screws. In the main frame 60, a cylinder 63 around which a reflecting material is wound in spiral is disposed in a window 67 positioned in a central portion of a rotating member 64, and the rotating member 64 is pivotally mounted so as to be readily rotated by the wind which blows in the direction of the arrow in Fig. 12.

Referring to Fig. 13, the rotating member 64 in Fig. 12 will now be explained in more detail. Fig. 13 shows an enlarged perspective view of the rotating member 64. The rotating member 64 constitutes a wind receiving blade whose opposite side portions 64a, 64b are curved as shown in Fig. 13. To an uppermost portion and a lowermost portion on the vertical central axis of the rotating member 64, there are fixed respectively shafts 65, 65' by press fits 65a, 65b. Furthermore, as mentioned previously, there is formed the window 67 in the central portion of the rotating member 64, and into the window 67, there is fitted the cylinder 63 in a manner such that one half of the rotating member 64 is projected equally from the rotating member 64. In Fig. 13, a star mark represents a light reflecting material to be sticked on the rotating member 64.

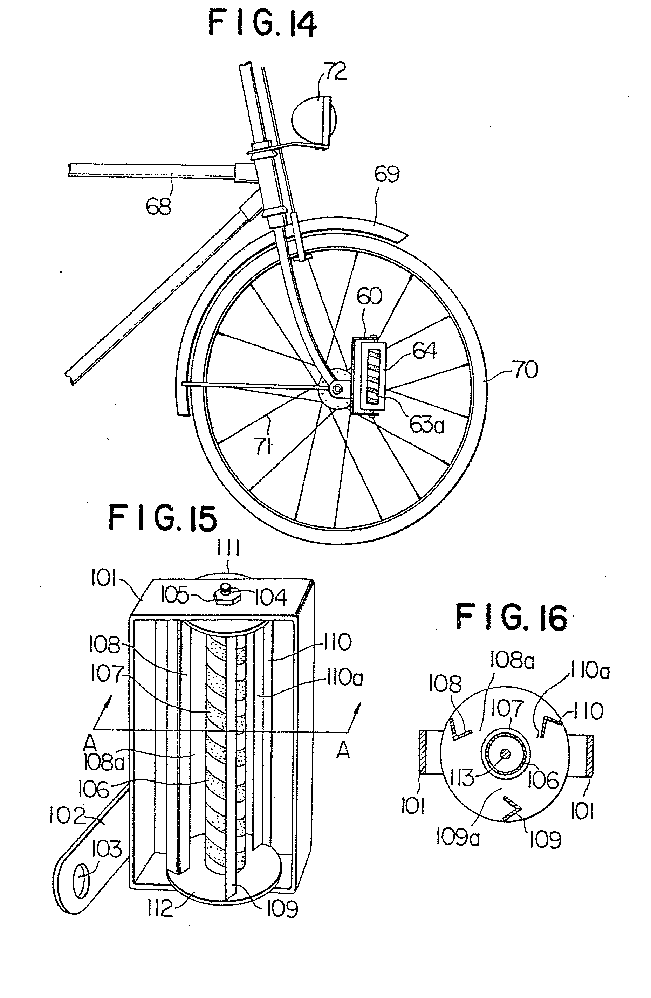

Fig. 14 shows how to attach the revolving reflector as shown in Figs. 12 and 13 to a bicycle in practice. In Fig. 14, reference numeral 60 represents the main frame of the revolving reflector. The revolving reflector is fixed to the shaft of a front wheel of the bicycle by screws, utilizing the nut of the shaft. Thus, the rotating member 64 is rotated by the wind. In this embodiment, the light reflecting material has a visual effect as if it moves upwards so that it is readily visible to the car drivers. In Fig. 14, the body of the bicycle is designated 68, a front fender 69, a tire 70, spokes 71, and a lamp 72.

In Fig. 15, there is perspectively shown a further embodiment of a revolving reflector of the type which is revolved by the wind according to the invention. In Fig. 15, a main frame of the revolving reflector is designated 101, which has an attachment portion 102 for attaching the main frame 101 to part of the bicycle. In the attachment portion 102, there is formed an attachment hole 103. The main frame is in the shape of a crosswise cut square pipe. In the central portion each of an upper and a lower portion of the main frame 101, there is formed a screw hole in which a conic bearing 104 can be screwed. The conic bearings are screwed in the screw holes and fixed thereto by nuts 105 in both the upper and the lower portion of the main frame 101. Between both the conic bearings 104, there is rotatably disposed a rotating member.

The rotating member will now be explained in more detail. In Fig. 15, reference numeral 106 represents a cylinder having, on its peripheral surface, a spiral light reflecting material 107. The opposite upper and lower ends of the cylinder 106 are fixed to an upper disc 111 and a lower disc 112. In the upper and lower discs 111, 112, there are embedded the opposite ends of wind receiving blades 108, 109, 110,which are disposed at an equal space therebetween parallel to a generating line of the cylinder 106. A shaft having sharp ends is disposed so as to pass through the central portions of the upper disc 11 and the lower disc 112 and to be fixed thereto, projecting from the upper and lower discs 111, 112 by an appropriate length. Thus, the cylinder106 is supported by the conic bearings 104 between the upper and lower discs 111, 112 in the manner of anti-friction.

Fig. 16 is a section taken on line A-A in Fig. 14. In this embodiment, the wind receiving blades 108, 109, 110 are rectangular in the shape and are bent almost at right angle in the direction of their longitudinal axis. Furthremore, in this embodiment, in order to rotate the wind receiving blades 108, 109, 110 counterclockwise about the shaft 113, they are disposed at a predetermined distance 108a, 109a, 110a from the peripheral surface of the cylinder 106, while their respective convex portions are positioned at an angle of $120^{\circ}$ to each other in the counterclockwise direction.

Since spaces 108a, 109a, 110a are placed between the cylinder 106 and the wind receiving blades 108, 109, 110, the receiving blades 108, 109, 110 cannot be balanced by any wind. Therefore the wind receiving blades 108, 109, 110 are immediately rotated by any wind if it is strong enough to rotate them.

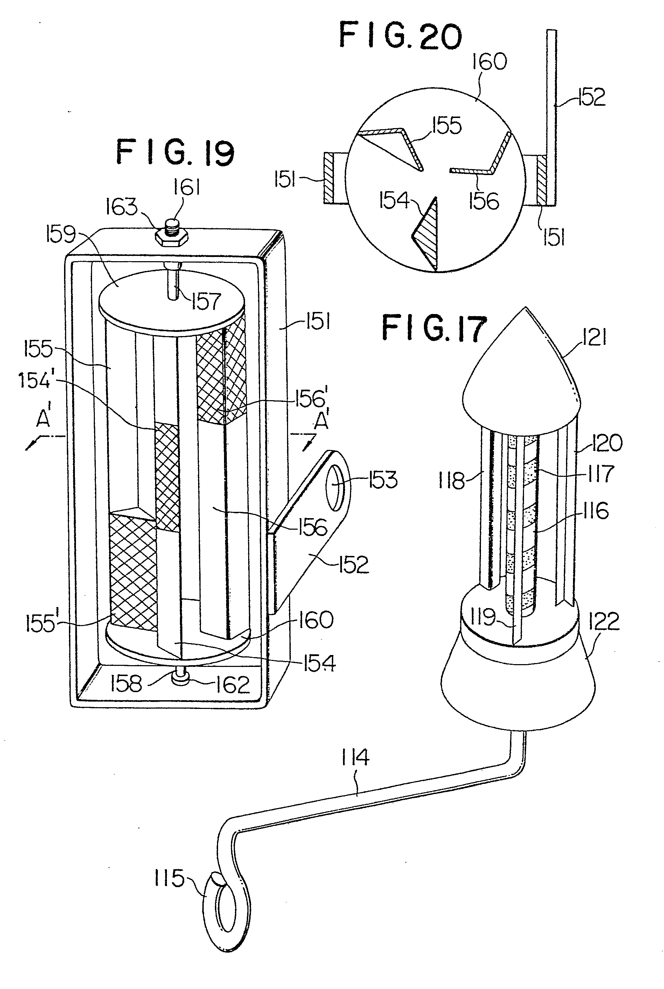

In Fig. 17, there is perspectively shown a further embodiment of a revolving reflector of the type which is revolved by the wind according to the invention. In Fig. 17, reference numeral 114 represents a support member for supporting a rotating member, one end of which serves as a shaft having a sharp end as well and in which a groove for a retaining ring is formed, and the other end of which has an attachment hole for attaching the revolving reflector to part of a bicycle. Reference numeral 116 represents a cylinder having a spiral light reflecting material 117 on the peripheral surface of the cylinder 116, numerals 118, 119 and 120 each represent wind receiving blades, and numerals 121 and 122 represent members equivalent to the upper disc 111 and the lower disc 112 in Figs. 15 and 16. A conic bearing is embedded in a central portion of the bottom of the conic head portion represented by the numeral 121. One end of the shaft having the sharp end support member 114 is passed through the center of the skirt-like disc represented by the numeral 122, so that the cylinder 116 is supported by the above-mentioned bearing and the shaft in such a manner of anti-friction. In order that the cylinder 116 is rotated readily, there is also formed an unloaded hole. In order to prevent the rotating member from being detached, the retaining ring is provided so as to be rotatable in the groove formed in the support member 114 on the bottom side of the skirt-like disc 122.

Fig. 18 shows how to attach the revolving reflector as shown in Figs. 15 and 16 to a bicycle. In Fig. 18, the revolving reflector is attached to the right side of the front wheel of the bicycle. In Fig. 18, the numeral 101 represents a support member for supporting the rotatable member, and numeral 102 represents an attachment member for attaching the support member 101 to part of the bicycle. The support member 101 is fixed to the shaft 123 of the front wheel by passing the support member 101 through the attachment hole 102, using a nut 124. A portion represented by the numeral 106 is a cylinder having a light reflecting material on its surface. Numerals 108, 110 and 109 (omitted in Fig. 18) represent wind receiving blades. Numeral 111 represents an upper disc, and numeral 112 a lower disc. Furthermore, the body of the bicycle is designated 125, a handle 126, fork blades of the front wheel 127, a front fender 128, a lamp 129, a tire 130, spokes 131, and a brake rod 132.

Fig. 19 shows a further embodiment of the invention. In Fig. 19, a main frame 151 is designated 151, which is shaped like a crosswise cut square pipe. The main frame 151 has an attachment member 125 on one longer side thereof. In the attachment member 152, there is formed an attachment hole 153 for attaching the revolving reflector to part of a bicycle therethrough. A rotating member is disposed inside the main frame 151. The rotating member will now be explained in reference to Fig. 19. In Fig. 19, wind receiving blades are designated 154, 155 and 156, which have light reflecting surfaces 154', 155' and 156' (cross lined portions in Fig. 19) whose positions are shifted in the axial direction of the wind receiving blades. The wind receiving blades are convex in the wind receiving direction. The upper ends and the lower ends of the wind receiving blades 154, 155, 156 are embedded in a disc 159 in which a shaft 157 is also embedded and in a disc 160 in which a shaft 158 is also embedded, respectively. The shafts 157, 158 are sharp in the other ends thereof. The thus constructed rotating member is attached to the main frame 151 in the following manner. In an upper portion of the main frame 151, there is formed a screw hole whose diameter is the same as the threads formed in an outer portion of a conic bearing 161. The conic bearing 161 is screwed in the above-mentioned screw hole and is fixed to the main frame 151 by a nut 163. In a central portion of a lower portion of the main frame 151, there is disposed a conic bearing 162 in the same manner as mentioned above. Between the two bearings 161 and 162, an upper sharp shaft 157 and a lower sharp shaft 158 are inserted into the upper and lower portions of the rotating member, respectively and the rotating member is rotatably supported by the two shafts 157, 158 and the bearings 161, 162, so that the rotating member can be readily rotated by the wind.

Referring to Fig. 20, the revolving reflector as shown in Fig. 19 will be explained in more detail. Fig. 20 is a section taken on line A-A in Fig. 19, viewed from the direction of the arrow at the line A-A. In Fig. 20, the main frame is designated 151 and 152, the wind receiving blades 154, 155 and 156, and the disc 160. In the wind receiving blade 154, a cross section of the previously mentioned light reflecting surface 154' is indicated, while in the wind receiving blade 155, a cross section of the convex wind receiving blade and an upper portion of the lower light reflecting surface. In the wind receiving blade 156, only its convex cross section is indicated. The wind receiving blades 154, 155, 156 are embedded in the disc 160 with an equal space and an equal angle therebetween radially from the center of the disc 160. The convex portions of the blades 154, 155, 156 are arranged in the same direction, namely clockwise in this embodiment.

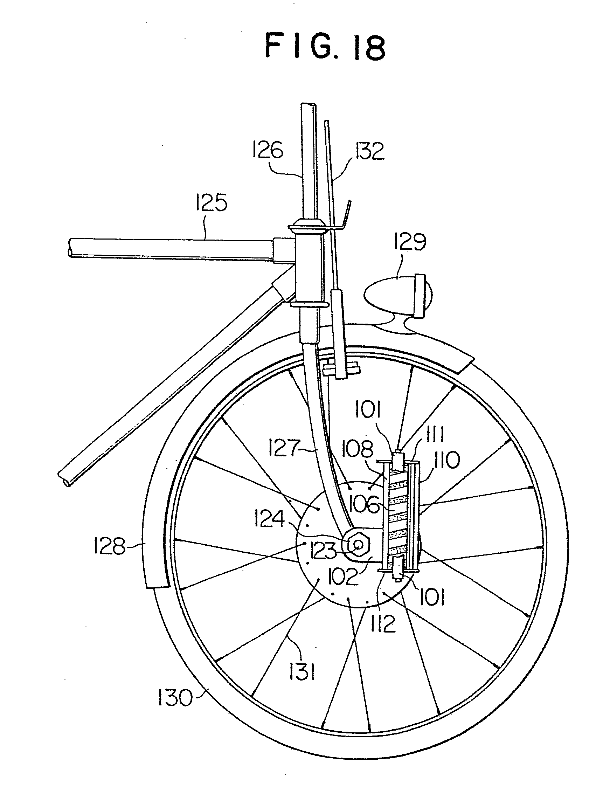

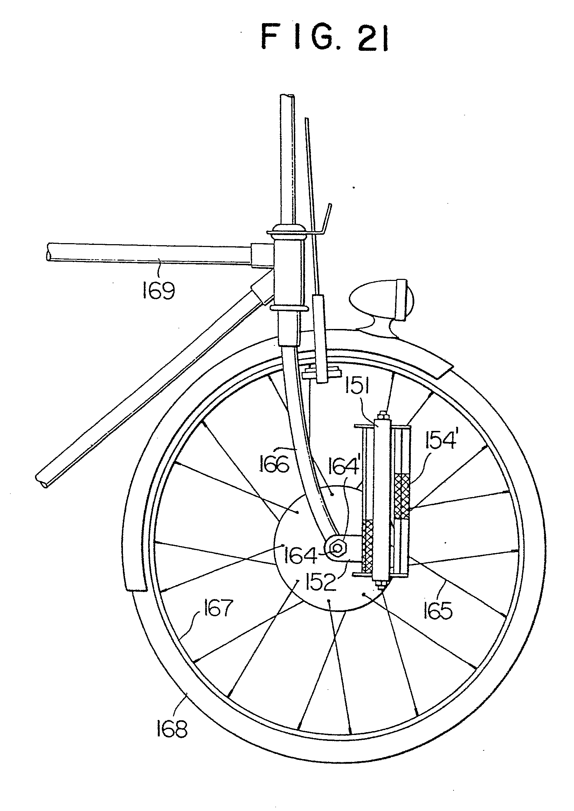

Fig. 21 shows how to attach the revolving reflector as shown in Figs. 19 and 20 to part of a bicycle. In Fig. 21, the attachment hole 153 of the main frame 151 is fitted to a shaft portion of the front wheel on its right side and is fixed thereto by a nut. As shown in Fig. 21, the axial direction of the revolving reflector is set so as to be vertical position, perpendicular to the ground, whereby the friction between the shafts 157, 158 having sharp ends and the conic bearings 161, 162 is reduced, so that the rotating member can be rotated by a weak wind. In the thus constructed revolving reflector, the concave sides of the wind receiving blades 154, 155, 156 are directed against the wind, so that the rotating member is rotated clockwise. In Fig. 21, the main frame of the revolving reflector is designated 151 and 152, the shaft of a front wheel 164, a nut of the shaft 164, spokes 165, the fork blades 166, the rim 167, the tire 168, and body of the bicycle 169.

- 1 -

WHAT IS CLAIMED IS:

1.    A revolving reflector for bicycles comprising a
revolving reflector member which is rotated at least by
running the bicycle, a support member for supporting rotatably said revolving reflector member, and an attachment
member for attaching said support member to part of said
bicycle.

2.    A revolving reflector for bicycles as in claim 1
in which said revolving reflector member comprises at least
a wind receiving blade, the opposite end portions of which
are curved in the opposite directions and at least one side
of which has a light reflecting surface.

3.    A revolving reflector for bicycles as in claim 1
in which said revolving reflector member comprises a propeller-
like wind receiving blade, at least one side of which as a
light reflecting surface.

4.    A revolving reflector for bicycles as in claim 1
in which  a shaft of said revolving reflector member is provided with a speed control apparatus for controlling the
revolution of said revolving reflector member.

5.    A revolving reflector for bicycles as in claim 1
further comprising a rotation transmission means for transmitting the rotation force of a rotating shaft of the bicyle
to said revolving reflector member.

6.    A revolving reflector for bicycles comprising a
revolving reflector member which is rotated at least by running the bicycle, a support member for supporting rotatably said revolving member, and an attachment memeber for attaching said support member to part of said bicycle, said revolving reflector member being a cylindrical member having a spiral light reflecting surface with a predetermined width on the peripheral surface thereof, provided with at least a shaft for supporting said support member in a position on the axis of said cylindrical member.

7.    A revolving reflector for bicycles as in claim 6 in which at part of said revolving reflector member, there is provided at least a wind receiving member, which is concave in the shape against the wind caused by running the bicyle.

8.    A revolving reflector for bicycles as in claim 6 in which a shaft of said revolving reflector member is provided with a speed control apparatus for controlling the revolution of said revolving reflector member.

9.    A revolving reflector for bicycles as in claim 6 further comprising a rotation trransmission means for transmitting the rotating force of a rotating shaft of the bicycle to said revolving reflector member.

10.    A revolving reflector for bicycles comprising a revolving reflector member which is rotated at least by running the bicycle and which comprises a plurality of wind receiving blades, a light reflecting surface of each of said wind receiving blades being shifted in the axial direction of said revolving reflector member, a support member for supporting rotatably said revolving reflector member, and an attachment member for attaching said support member to part of said bicycle.

11.    A revolving reflector for bicycles as in claim 10 in which a shaft of said revolving reflector member is provided with a speed control apparatus for controlling the revolution of said revolving reflector member.

12.    A revolving reflector for bicycles as in claim 10 further comprising a rotation transmission means for transmitting the  rotating force of a rotating shaft of the bicycle to said revolving reflector member.

13.    A revolving reflector for bicycles comprising a revolving reflector member which is rotated at least by running the bicycle and which serves as a wind receiving blades whose opposite side portions are curved in opposite directions to each other, a support member for supporting rotatably said revolving reflector member, and an attachment member for attaching said support member to part of said bicycle.

1/8

# FIG. 1

# FIG. 2

# FIG. 3

0014986

# FIG.4

# FIG.5

# FIG.6

3/8

**FIG.7**

13a

13

14a

14c

14d

14e

14

14b

**FIG.9**

20

19a

19

18

19b

20a

21b

21a

21

**FIG.8**

15a

15

15b

16a

16

17

4/8

**FIG. 10**

**FIG. 11**

**FIG. 12**

**FIG. 13**

518

# F I G. 14

72
68
69
60
64
70
63a
71

# F I G. 15

111
101
105 104
108
107
110
110a
108a
106
102
103
A
A
112
109

# F I G. 16

108a
108
110a
107
110
113
106
101
101
109a
109

618

## FIG.20

160
152
155
151
154
156
151

## FIG.19

161
163
159
157
151
155
156'
154'
A'
A'
153
156
152
155'
160
158
162
154

## FIG.17

121
120
118
117
116
119
122

114

115

0014986

# FIG. 18

8/8

# FIG. 21

169

151

166  164'  154'

164  152  165

167

168

0014986

European Patent
Office

**EUROPEAN SEARCH REPORT**

Application number

EP 80 10 0814

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| | US - A - 3 758 190 (DOUGLAS) <br> * Column 7, lines 29-49; figures 1-9 * | 1,2,4, 8,10, 11,13 | B 62 J 5/20 |
| | -- | | |
| | US - A - 2 701 540 (HAMILTON) <br> * Column 1, lines 77-81 * | 1,3,6 | |
| | -- | | |
| | US - A - 4 105 286 (CURRAN) <br> * Figures 1-3 * | 1,5, 12 | **TECHNICAL FIELDS SEARCHED (Int.Cl.)** |
| | -- | | |
| | DE - A - 2 544 957 (KIRK) <br> * Figure 4 * | 1,6,9 | B 62 J |
| | -- | | |
| | US - A - 4 103 924 (SUHM) <br> * Column 1, lines 44-57; figures 1-3 * | 1,6,7 | |
| | ---- | | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| X | The present search report has been drawn up for all claims | | |
|---|---|---|---|
| Place of search <br> The Hague | Date of completion of the search <br> 20-05-1980 | Examiner <br> FOUCRAY | |